# FASCICULE DE BREVET EUROPEEN

(11) **EP 3 587 274 B1**
(45) Date de publication et mention de la délivrance du brevet: **12.08.2020**
(21) Numéro de dépôt: 19179322.3
(22) Date de dépôt: 11.06.2019
(51) Int. Cl.: B64D 33/02, B64D 29/00, F02C 7/04

(54) **NACELLE D'UN ENSEMBLE PROPULSIF D'AÉRONEF COMPORTANT UNE PLURALITÉ D'ÉLÉMENTS AMORTISSEURS ENTRE UNE PARTIE AVANT ET UNE PARTIE PRINCIPALE, ET ENSEMBLE PROPULSIF D'AÉRONEF ASSOCIÉ**
GONDEL EINER FLUGZEUGANTRIEBSANORDNUNG MIT MEHREREN DÄMPFUNGSELEMENTEN ZWISCHEN VORDEREM UND HAUPTTEIL UND ZUGEHÖRIGER FLUGZEUGANTRIEBSANORDNUNG
AIRCRAFT PROPULSION ASSEMBLY NACELLE HAVING A PLURALITY OF SHOCK ABSORBING ELEMENTS BETWEEN A FRONT PART AND A MAIN PART, AND ASSOCIATED AIRCRAFT PROPULSION ASSEMBLY

(30) Priorité: 28.06.2018 FR 1855835
(43) Date de publication de la demande: 01.01.2020
(73) Titulaire: AIRBUS OPERATIONS (S.A.S.), 31060 Toulouse (FR)
(72) Inventeur: PORTE, Alain, 31060 Toulouse Cedex 9 (FR); BRETON, Clément, 31060 Toulouse Cedex 9 (FR); SENTIER, Julien, 31060 Toulouse Cedex 9 (FR); VINCHES, Frédéric, 31060 Toulouse Cedex 9 (FR); BROCHARD, Wolfgang, 31060 Toulouse Cedex 9 (FR)
(74) Mandataire: Gicquel, Olivier Yves Gérard

(56) Documents cités:
- EP-A1- 2 256 302
- WO-A1-2008/006959
- FR-A1- 2 973 467
- FR-A1- 3 055 885

## Description

La présente invention concerne les nacelles des ensembles propulsifs d'aéronef. La présente invention concerne aussi un ensemble propulsif d'aéronef comprenant une nacelle.

Un ensemble propulsif d'aéronef est un dispositif permettant de générer une poussée. Cette poussée constitue la force motrice de l'aéronef équipé de l'ensemble propulsif.

De manière générale, la présente invention concerne les pièces de liaison employées pour lier différentes parties constitutives des nacelles des ensembles propulsifs d'aéronef, qui sont soumises à des sollicitations mécaniques importantes.

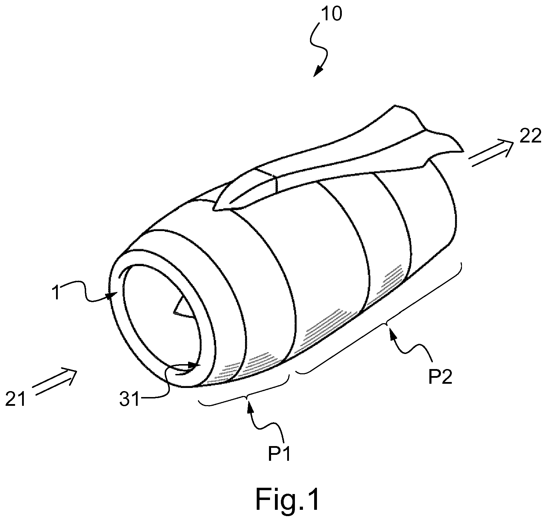

Classiquement, une nacelle comporte deux parties : une partie avant et une partie principale. Une telle structure est représentée à la figure 1.

Plus précisément, la nacelle comporte une partie avant P1 formant l'entrée d'air 21 et dans laquelle est généralement disposée la soufflante de l'ensemble propulsif. La nacelle comporte aussi une partie principale P2 constituant le reste de la nacelle. Le moteur de l'ensemble propulsif, par exemple un tuboréacteur, est contenu dans la partie principale P2.

Dans l'ensemble du présent document, les notions d'« avant » et d' « arrière » se comprennent selon la direction du flux d'air dans l'ensemble propulsif. Par exemple, l'air entre par l'avant de l'ensemble propulsif, c'est-à-dire par la partie avant P1 de la nacelle. L'air passe à travers l'ensemble propulsif. Puis, l'air sort par l'arrière de l'ensemble propulsif, c'est-à-dire par l'extrémité arrière de la partie principale P2, ou encore la sortie d'air 22 de l'ensemble propulsif.

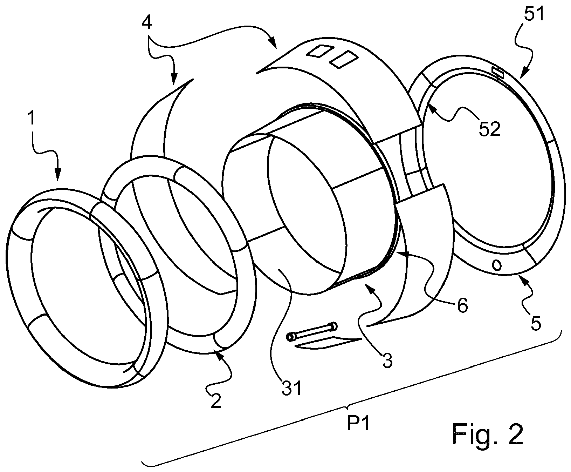

Une structure classique de partie avant P1, telle que connue dans l'état de la technique est décrite, plus précisément, en référence à la figure 2.

La partie avant P1 comporte une lèvre 1 formant l'entrée d'air 21. La lèvre 1 est reliée à un cadre dit cadre avant 2.

La partie avant P1 comporte généralement un panneau appelé panneau acoustique 3. Le panneau acoustique 3 constitue une structure interne de la partie avant P1 dont elle peut former une surface intérieure 31. Le panneau acoustique 3 permet d'atténuer le bruit généré notamment par les aubes de la soufflante du groupe propulsif.

Dans une partie avant de la nacelle P1 conforme à l'état de la technique représenté à la figure 2, un cadre dit cadre de rigidification 5 lie le panneau acoustique 3 au panneau externe 4.

Le cadre de rigidification 5 est généralement positionné à l'extrémité arrière de la partie avant P1.

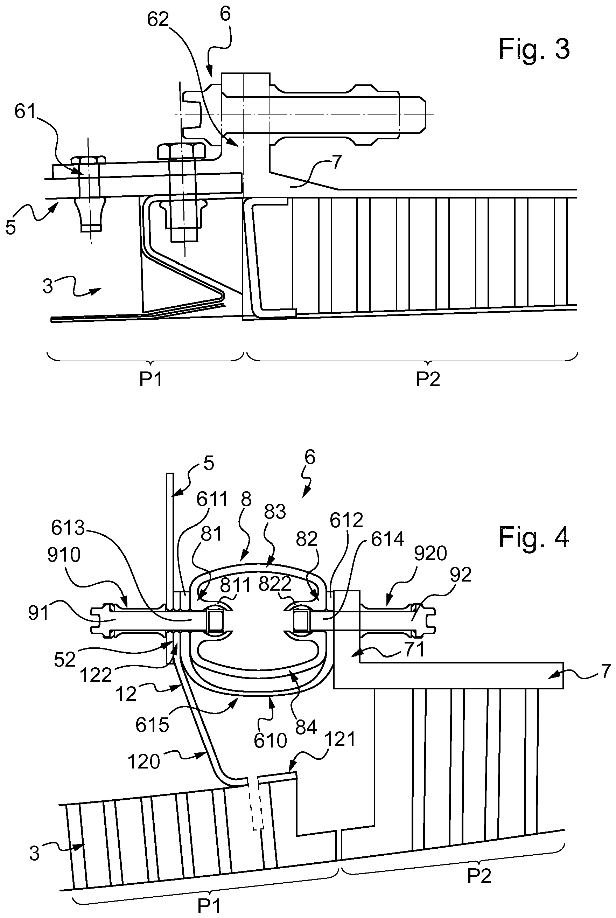

Classiquement, comme montré à la figure 3 qui illustre une configuration connue de liaison entre la partie avant P1 et la partie principale P2 d'une nacelle, la partie avant P1 est liée à la partie principale P2 par une bride de jonction 6.

Plus précisément, la bride de jonction 6 est liée d'une part au panneau acoustique 3 de la partie avant P1 et d'autre part à une bride moteur 7 de la partie principale P2 qui est rigidement liée au moteur de l'ensemble propulsif. Ces liaisons sont classiquement réalisées par des systèmes vis-écrou.

Toutefois, bien que les pièces classiquement utilisées aient un niveau de fiabilité très important, notamment pour ce qui concerne leur résistance en fatigue, les liaisons mécaniques qu'elles forment peuvent être optimisées afin de pouvoir répondre à des contraintes mécaniques très importantes au niveau de la bride de jonction 6.

Plus particulièrement, des événements pouvant survenir lors des différentes phases de vol d'un aéronef sont susceptibles d'endommager les ensembles propulsifs. Un tel événement peut être notamment un impact avec des objets extérieurs, tel que des oiseaux. Un autre événement envisagé peut être une rupture brutale d'une aube de la soufflante du groupe propulsif, ou « FBO », acronyme anglophone pour « Fan Blade Out ». Cet événement a pour conséquence un impact violent à l'intérieur de la nacelle créant un balourd qui génère un déséquilibre important des contraintes au sein de l'ensemble propulsif.

Ainsi, une sollicitation importante peut apparaître au niveau de la liaison entre la partie avant P1 et la partie principale P2. Cette liaison doit résister autant que possible aux événements précités.

Les documents FR 3 055 885 A1, WO 2008/006959 A1 et EP 2 256 302 A1 décrivent une nacelle d'ensemble propulsif comportant une partie avant liée à une partie principale.

La présente invention a pour but d'optimiser la configuration de la liaison entre la partie avant P1 et la partie principale P2 d'une nacelle d'un ensemble propulsif d'aéronef afin de lui permettre de supporter des contraintes mécaniques plus importantes que les liaisons connues dans l'état de la technique.

L'invention a ainsi pour objet une nacelle d'un ensemble propulsif d'aéronef, comportant une partie avant et une partie principale, ladite partie avant ayant une extrémité avant formant une entrée d'air dans la nacelle et une extrémité arrière comportant un cadre de rigidification annulaire autour d'un axe de révolution, ledit cadre de rigidification comprenant un bord périphérique externe lié à un panneau externe de la nacelle et un bord périphérique interne. La partie avant comporte une pièce de liaison reliant ledit bord périphérique interne du cadre de rigidification à une structure interne de la nacelle et une bride de jonction liée d'une part audit bord périphérique interne du cadre de rigidification et d'autre part à une bride moteur de la partie principale. La bride de jonction comporte dans l'invention plusieurs éléments amortisseurs déformables repartis le long du bord périphérique interne du cadre de rigidification distant de la structure interne de la nacelle.

La présence d'éléments amortisseurs déformables au niveau de bride de jonction permet d'absorber des contraintes mécaniques plus importantes qu'une liaison classique telle que connue dans l'état de la technique.

Dans un mode de réalisation, au moins l'une des liaisons entre la bride de jonction et le cadre de rigidification d'une part, et entre la bride de jonction et la bride moteur d'autre part comporte une entretoise adaptée à se déformer sous l'effet de contraintes mécaniques entre ladite bride moteur et ledit cadre de rigidification.

Chaque élément amortisseur peut être avantageusement formé d'un pont de matière présentant une section fermée creuse. Par exemple, chaque élément amortisseur peut présenter une section de forme sensiblement ovale, par exemple elliptique, ou circulaire.

Dans un mode de réalisation, au moins un élément amortisseur peut comporter une section fermée creuse formant une cavité dans laquelle est inséré un élément en élastomère.

L'élément en élastomère peut comporter au moins un évidement de matière.

L'élément en élastomère peut s'étendre entre au moins, deux surfaces de l'élément amortisseur.

Dans un mode de réalisation particulier, l'élément en élastomère s'étend entre deux surfaces opposées de l'élément amortisseur.

Dans un mode de réalisation particulier, l'élément amortisseur comporte un pont de matière et un élément en élastomère. Le pont de matière comporte une section ouverte creuse et l'élément en élastomère tapisse les parois internes de l'élément amortisseur.

Dans un autre mode de réalisation, l'élément amortisseur comporte une armature et un élément en élastomère. L'armature comporte une section sensiblement en forme de « S ». L'armature est en tout ou partie incluse dans l'élément en élastomère. Dans un mode de réalisation particulier, chaque élément amortisseur présente une section de forme sensiblement ovale, par exemple elliptique, ou circulaire.

La nacelle peut comporter des liaisons communes entre le cadre de rigidification, la pièce de liaison et les éléments amortisseurs de la bride de jonction.

Les liaisons entre le cadre de rigidification et la bride de jonction d'une part et entre la bride de jonction et la bride moteur d'autre part peuvent comporter chacune au moins un ensemble vis-écrou. En outre, chaque élément amortisseur de la bride de jonction peut comporter un premier côté et un deuxième côté qui comportent respectivement des supports adaptés à recevoir et maintenir les écrous desdits ensembles vis-écrous.

Dans un mode de réalisation particulier, la bride de jonction peut comporter une bride d'étanchéité formée d'un anneau ayant une section sensiblement en forme de « U ». Une branche du « U » est alors liée audit cadre de rigidification et l'autre branche du « U » est liée à la bride moteur. La bride d'étanchéité, l'élément amortisseur, et le cadre de rigidification d'une part, et la bride d'étanchéité, l'élément amortisseur et la bride moteur d'autre part, peuvent être liés entre eux pas des liaisons communes tels que des systèmes vis-écrou.

Les liaisons entre le cadre de rigidification et la bride de jonction d'une part, et entre la bride de jonction et la bride moteur d'autre part sont décalées les unes des autres circonférentiellement de sorte à ne pas être en regard.

L'invention porte également sur un ensemble propulsif d'aéronef comportant une nacelle telle que décrite ci-dessus.

D'autres particularités et avantages de l'invention apparaîtront encore dans la description ci-après.

Aux dessins annexés, donnés à titre d'exemples non limitatifs :
- la figure 1 représente une nacelle conforme à l'art antérieur selon une vue schématique en trois dimensions;
- la figure 2 représente une vue schématique en trois dimensions éclatée des principaux éléments constitutifs de la partie avant d'une nacelle conforme à l'art antérieur ;
- la figure 3 représente une vue schématique en coupe de la liaison entre le panneau acoustique et la bride moteur d'une nacelle conforme à l'art antérieur;
- la figure 4 représente une vue schématique en coupe de la liaison entre le panneau acoustique et la bride moteur d'une nacelle selon un mode de réalisation de l'invention;
- la figure 5 représente une vue schématique en trois dimensions de plusieurs éléments amortisseurs en position dans une bride de jonction selon un mode de réalisation de l'invention ;
- la figure 6 représente un graphique de répartition des forces dans un élément amortisseur selon un mode de réalisation de l'invention ;
- les figures 7a à 7c représentent, selon une vue schématique en trois dimensions, trois variantes d'un élément amortisseur à section fermée creuse dans lequel est inséré un élément en élastomère;
- les figures 8a à 8c représentent, selon une vue schématique en trois dimensions, trois variantes d'un élément amortisseur à section ouverte creuse dans lequel est inséré un élément en élastomère ;
- la figure 9 représente selon une vue schématique en trois dimensions une autre variante d'élément amortisseur ;et
- les figures 10a à 10c représentent, selon un schéma de principe bidimensionnel, des exemples de répartition d'éléments amortisseurs à la périphérie d'une bride de jonction d'une nacelle d'un ensemble propulsif d'aéronef.

Les figures 1 à 3 ont été décrites de manière générale ci-avant en référence à l'état de la technique antérieure à l'invention.

Pour la bonne compréhension de l'invention, on notera par ailleurs en référence aux figures 1 à 3 les éléments décrits ci-après concernant la partie avant P1, la partie principale P2 et le cadre de rigidification 5 de la partie avant P1.

La partie avant P1 est la partie par laquelle le flux d'air 21 entre dans la nacelle 10. La partie avant P1 comporte une lèvre d'entrée 1 visible de l'extérieur et constituant les bords de l'entrée de la nacelle 10. Dans le prolongement de la partie avant P1 est liée la partie principale P2.

La partie principale P2 comporte principalement les éléments moteurs d'un ensemble propulsif. L'extrémité arrière de la partie principale P2 comporte la sortie d'air 22. Typiquement, la partie avant P1 comporte, de l'avant vers l'arrière de la nacelle 10, une lèvre 1, un cadre avant 2, un panneau acoustique 3 entouré de panneaux externes 4 et un cadre de rigidification 5.

Le cadre de de rigidification 5 relie le panneau externe 4 au panneau acoustique 3.

Le cadre de rigidification 5 est disposé à une extrémité arrière de la partie avant P1.

Un exemple de liaison mise en œuvre dans l'état de la technique entre la partie avant P1 et la partie principale P2 d'une nacelle d'un ensemble propulsif d'aéronef est représenté à la figure 3. Cette figure représente en particulier une configuration connue de liaison de la partie avant P1 (au niveau du cadre de rigidification 5 et du panneau acoustique 3 de ladite partie avant P1) et une bride moteur 7 de la partie principale P2.

Ainsi, le cadre de rigidification 5 est lié à la bride moteur 7 par l'intermédiaire d'une bride de jonction 6.

Plus précisément, la bride de jonction 6 est une pièce formée dans cet exemple d'un anneau ayant une section en forme de « L ». La bride de jonction 6 comporte deux branches 61, 62 sur lesquelles sont positionnées des perforations aptes à recevoir des moyens de liaison. Une première branche 61 est liée à la fois au cadre de rigidification 5 et au panneau acoustique 3 par boulonnage à l'aide de systèmes vis-écrou ou par des rivets. Une deuxième branche 62 est liée uniquement à la bride moteur 7 par un système vis-écrou.

Cependant, ce type de liaison est rigide et peut être amélioré dans le but d'absorber des contraintes très importantes exercées au niveau de la bride moteur 7.

Par ailleurs, le type de liaison employé dans l'art antérieur et décrit ci-avant n'est pas optimal pour la nacelle 10 d'un ensemble propulsif à très fort taux de dilution. Ce type d'ensemble propulsif présente un bon rendement énergétique, ce qui permet de réduire la consommation de carburant. Toutefois, les contraintes mécaniques sont potentiellement plus importantes dans ce type de moteur que dans les moteurs classiques. En outre, ce type de moteur présente une nacelle 10 de grandes dimensions, ayant un profil aérodynamique épais et une longueur plus courte que celles des groupes propulsifs classiques. Or, les liaisons décrites en référence aux figures 1 à 3 sont mal adaptées à une telle configuration de nacelle 10. En effet, les liaisons décrites plus haut ne sont pas adaptées pour lier une partie avant P1 à une partie principale P2 lorsque la bride moteur 7 est située à un niveau de celui de la structure interne (par exemple le panneau acoustique) de la partie avant P1. Ainsi, une structure différente de la liaison entre la partie avant P1 et la partie principale P2 peut être nécessaire pour ce type de moteur.

La figure 4 représente une vue en coupe schématique de la liaison selon un mode de réalisation de l'invention entre la partie avant P1 et la partie principale P2 d'une nacelle 10. La configuration présentée à la figure 4 correspond en particulier, mais de manière non limitative, à une liaison de nacelle de moteur à fort taux de dilution. En effet, comme rappelé précédemment, dans ce type de moteur, la nacelle 10 est de grande dimension.

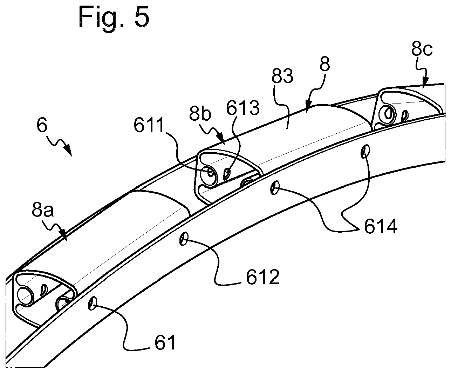

Selon l'invention, et comme représenté notamment à la figure 4, le cadre de rigidification 5 est en liaison avec la bride moteur 7 par l'intermédiaire d'une bride de jonction 6 comportant une pluralité d'éléments amortisseurs 8. La figure 4 est une vue en coupe de la liaison entre une partie avant P1 et une partie arrière P2 de nacelle selon un mode de réalisation de l'invention, de sorte qu'un seul élément amortisseur 8 y est visible. Comme cela sera détaillé dans ce qui suit, notamment en référence à la figure 5, l'invention propose cependant une bride de jonction 6 comportant plusieurs éléments amortisseurs répartis circonférentiellement dans la bride de jonction 6, c'est-à-dire répartis le long du bord périphérique interne 52 du cadre de rigidification 5.

Dans le mode de réalisation représenté, la bride de liaison 6 comporte également une bride d'étanchéité 610 optionnelle.

La bride d'étanchéité 610 a pour fonction d'assurer l'étanchéité au niveau de la jonction réalisée par la bride de jonction 6. La bride d'étanchéité 610 a en particulier la fonction d'assurer l'étanchéité de la bride de jonction 6. Elle n'intervient pas, ou peu, dans la dissipation des contraintes mécaniques au niveau de cette jonction.

Ici, la bride d'étanchéité 610 est une pièce de section sensiblement en forme de « U » dont l'ouverture est orientée vers l'extérieur de la nacelle 10.

Dans un mode de réalisation alternative, la section en « U » peut avoir son ouverture orientée vers l'intérieur de la nacelle 10.

La bride d'étanchéité 610 peut être formée comme un anneau monobloc, ou formé de plusieurs segments en arc de cercle aboutés les uns aux autres (par exemple éclissés).

La bride d'étanchéité 610 peut prendre toute autre forme ou constitution garantissant le niveau d'étanchéité souhaité. L'étanchéité peut également être réalisée, dans un exemple de mode de réalisation non représenté, en intercalant un joint (par exemple en élastomère, et/ou un anneau rigide) de part et d'autre de la bride de jonction 6, et en particulier de part et d'autre de l'élément amortisseur 8.

Dans l'exemple de mode de réalisation représenté à la figure 4, l'élément amortisseur 8 est logé dans la bride d'étanchéité 610.

L'élément amortisseur 8 assure la liaison mécanique entre le cadre de rigidification 5 et la bride moteur 7.

Du fait de la configuration de la nacelle, le cadre de rigidification 5 présente un bord périphérique interne 52 distant de la structure interne de la nacelle (à savoir le panneau acoustique 3). Il est ainsi prévu une pièce de liaison 12 qui relie le bord périphérique interne 52 du cadre de rigidification 5 audit panneau acoustique 3.

La pièce de liaison 12 est ici une pièce sensiblement de révolution comportant dans l'exemple représenté trois portions. Une portion principale 120 s'étend entre l'élément amortisseur 8 et le panneau acoustique 3. Une portion 121 est en contact avec le panneau acoustique 3 et une portion 122 est en contact sur une première face avec le cadre de rigidification 5 et sur une face opposée à la première face avec la bride de jonction 6. D'autre configurations de la pièce de liaison 12 peuvent être envisagées : par exemple en « L » (selon les deux orientation possibles), ou présentant plus de trois portions, ou en « Y » (les deux branches symétriques du Y étant liées au panneau acoustique), etc.

Pour permettre de réaliser les liaisons par des éléments traversant (vis, goujons, ou rivets par exemple) les différentes pièces jointes entre elles, des perforations peuvent être réalisées en correspondance dans lesdites pièces.

Par exemple, la première branche 121 de la pièce de liaison 12 comprend une perforation qui est en regard d'une perforation réalisée dans une structure interne de la partie avant P1, par exemple dans le panneau acoustique 3. La deuxième branche 122 de la pièce de liaison 12 comprend aussi une perforation en regard d'une perforation de la bride de jonction 6, en particulier d'une perforation de l'élément amortisseur 8. Le cas échéant, une perforation correspondante peut être prévue sur une branche 611 de la bride d'étanchéité 610. Chaque perforation est apte à recevoir un élément de liaison, tel qu'un système vis-écrou, pour la fixation au cadre de rigidification 5.

Ainsi, la bride d'étanchéité 610 peut présenter une forme apte d'une part à loger les éléments amortisseurs 8 et lui permettant d'être fixée à la fois au cadre de rigidification 5 et à la bride moteur 7.

Ici, la bride d'étanchéité 610 comprend au moins deux branches sensiblement parallèles 611 et 612 s'étendant sensiblement parallèlement à la fois à une branche 52 du cadre de rigidification 5 et à une branche 71 de la bride moteur 7. Autrement dit, les branches 611, 612 de la bride d'étanchéité 610, la branche 71 de la bride moteur 7 et la deuxième branche 52 du cadre de rigidification 5 sont sensiblement parallèles deux à deux.

La bride d'étanchéité 610 comprend dans chaque branche 611, 612 une perforation en regard d'une perforation réalisée respectivement dans l'épaisseur d'une branche 52 du cadre de rigidification 5 et dans une branche 71 de la bride moteur 7. La bride moteur 7 est ici une pièce ayant une section sensiblement en forme de « L ». Chaque perforation est apte à recevoir un élément de liaison, tel qu'un système vis-écrou 91, 92, pour la fixation de la bride d'étanchéité 610 au cadre de rigidification 5 et pour la fixation de la bride d'étanchéité 610 à la bride moteur 7.

Ce type de configuration mettant en œuvre des liaisons communes permet de simplifier le montage de l'ensemble et d'augmenter la compacité du dispositif.

Dans l'exemple de mode de réalisation représenté aux figures 4 et 5, chaque élément amortisseur 8 est une pièce déformable de liaison mécanique.

L'élément amortisseur 8 est apte à se déformer pour reprendre une sollicitation mécanique importante qui s'exerce entre la bride moteur 7 de la partie principale P2 et la structure de la partie avant P1 (c'est-à-dire le cadre de rigidification 5 et la pièce de liaison 12 rigidement liée au panneau acoustique 3).

En effet, la présence d'un élément amortisseur 8 permet ainsi d'absorber de l'énergie notamment lorsqu'un événement susceptible d'endommager la nacelle 10 se produit. La bride de jonction 6 comportant plusieurs éléments amortisseurs 8 répartis ciconférentiellement, l'invention permet de reprendre localement l'effort lors d'un impact localisé.

La fonction d'absorption d'énergie assurée par l'élément amortisseur 8 peut être optionnellement complétée par des entretoises 910, 920, déformables. Ces entretoises 910, 920 sont positionnées sur au moins l'une des liaisons entre la bride de jonction 6 et le cadre de rigidification 5, et entre la bride de jonction 6 et la bride moteur 7.

Ainsi, selon les efforts exercés entre la partie principale P2 et la partie avant P1, ces efforts sont repris soit par les liaisons dotées des entretoises 910, 920, ce qui entraine le cas échéant la déformation de ces entretoises, soit par l'élément amortisseur 8, soit conjointement par les liaisons dotées des entretoises et par l'élément amortisseurs 8. Il peut exister un jeu entre l'entretoise et la liaison sur laquelle elle est installée. La longueur d'une entretoise (à supposer qu'elle soit de forme sensiblement cylindrique de révolution) peut typiquement être de l'ordre de deux fois son diamètre. L'entretoise peut être métallique, par exemple en acier. A chacune de ses extrémités, elle peut comporter une collerette d'appui.

Structurellement, chaque élément amortisseur 8 comporte dans le mode de réalisation ici représenté deux côtés 81, 82.

D'une part, le premier côté 81 de l'élément amortisseur 8 est en contact plan avec la première branche 611 de la bride d'étanchéité 610. D'autre part, le deuxième côté 82 de l'élément amortisseur 8 est en contact plan avec la deuxième branche 612 de la bride d'étanchéité 610.

Les deux côtés 81, 82 de l'élément amortisseur 8 comportent des perforations dans leur épaisseur en vis-à-vis des perforations 611, 612 de la bride d'étanchéité 610. Ces perforations sont aptes à recevoir un ou plusieurs systèmes vis écrou 91, 92 pour la fixation de l'élément amortisseur 8 à la bride d'étanchéité 610.

De manière avantageuse, les premier et deuxième côtés 81, 82 peuvent être dotés de supports 811, 822 adaptés à recevoir et à maintenir un écrou. Chaque support 811, 822 peut avoir une forme en corolle adaptée au maintien des écrous employés dans les liaisons formées par des systèmes vis-écrous 91, 92 de part et d'autre de l'élément amortisseur 8. Cette forme en corolle permet de recevoir l'écrou ce qui permet d'éviter d'avoir à le tenir lors de l'assemblage avec la vis.

Les écrous employés dans les systèmes vis-écrous peuvent notamment être des écrous borgnes.

Ainsi, dans le mode de réalisation illustré à la figure 4, la branche 52 du cadre de rigidification 5, la première branche 611 de la bride d'étanchéité 610 et le premier côté 81 de l'élément amortisseur 8 sont liés ensemble par une même fixation. De même, la branche 71 de la bride moteur 7, la deuxième branche 612 de la bride d'étanchéité 610 et le deuxième côté 82 de l'élément amortisseur 8 sont fixés ensemble par une même fixation.

Les fixations communes permettent de transmettre les efforts entre l'élément lié à la bride de jonction 6 et la bride de jonction 6, notamment dans l'élément amortisseur. Ce type de montage présente aussi l'avantage de réduire le nombre de fixations à réaliser. Ainsi, le montage est simplifié et optimisé.

L'élément amortisseur 8 peut être un corps creux apte à se déformer sous l'effet de contraintes mécaniques. Par exemple, en référence à la figure 4, l'élément amortisseur 8 est une tubulure obtenue, par exemple, par extrusion ou pliage, et le cas échéant usinée. Ainsi, si une contrainte mécanique importante lui est appliquée, l'élément amortisseur 8 peut se plier, se déformer, de sorte à absorber de l'énergie, et retrouver éventuellement ensuite sa forme d'origine ou une forme proche de sa forme d'origine (selon le niveau de contraintes subi).

L'élément amortisseur 8 peut être un corps creux présentant une section sensiblement ovale, notamment elliptique, ou circulaire.

L'élément amortisseur 8 peut présenter de nombreuses autres configurations. Il peut présenter diverses sections, fermées (par exemple « en cacahouète » c'est-à-dire bilobée, présentant une concavité d'un côté ou sur deux côtés opposés) ou ouvertes, par exemple en U (analogue à la section de la bride d'étanchéité 610 représentée à la figure 4), ou en W. Il peut être formé d'un élément déformable ayant une structure alvéolaire ou ajourée, notamment en « nid d'abeille », ou de type « isogrid » (c'est-à-dire présentant des nervures de renforcement définissant des alvéoles triangulaires, notamment en triangle isocèle).

Dans un mode de réalisation avantageux, l'élément amortisseur 8 est une pièce de section sensiblement elliptique. Dans l'exemple ici représenté, l'élément amortisseur 8 de section sensiblement elliptique comprend des sommets aplatis formant le premier côté 81 et le deuxième côté 82, lesdits premier et deuxième côté étant liés par deux branches 83, 84 correspondant à des portions d'ellipse. Les deux branches 83, 84 sont libres de tout contact et s'étendent de part et d'autre de la section sensiblement elliptique. Cette forme particulière permet à l'élément amortisseur 8 d'absorber des contraintes mécaniques.

L'élément amortisseur 8 peut être formé en tout ou partie en métal, en matériau composite ou en matériau hybride composite/métallique. Ainsi, le poids de l'élément amortisseur 8 est réduit tout en garantissant des propriétés mécaniques optimales telle que la résistance à la fatigue et la résistance à la déformation.

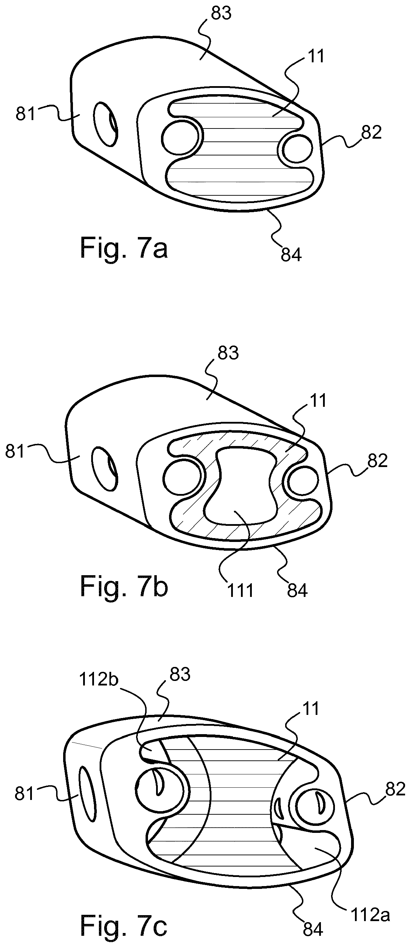

Les figures 7a à 7c représentent un autre mode de réalisation de l'élément amortisseur 8. Comme dans le mode de réalisation représenté à la figure 4, l'élément amortisseur 8 comporte un corps creux, c'est-à-dire un corps dont la section transversale est creuse. L'élément amortisseur peut présenter une section sensiblement ovale, en particulier une section elliptique, ou circulaire. L'élément amortisseur 8 forme au moins une cavité.

Dans ce mode de réalisation, un élastomère est coulé directement dans la cavité de l'élément amortisseur 8. L'élastomère est ainsi directement réticulé, de manière préférentielle vulcanisé, dans ladite cavité, afin de former un élément en élastomère 11.

Dans un mode de réalisation particulier, l'élément en élastomère 11 peut comporter un évidement de matière formé lors de la vulcanisation. L'évidement peut avoir toute forme.

Dans un mode de réalisation alternatif, l'élément en élastomère 11 peut être un bloc solide, usiné ou non, introduit dans la cavité de l'élément amortisseur 8. Lorsque l'élément en élastomère 11 est usiné, la forme de la cavité peut être reprise par l'élastomère. Ainsi, l'élément en élastomère 11 épouse en tout ou partie la forme de la cavité.

Autrement dit, ici l'élément en élastomère 11 peut être en contact avec seulement quelques surfaces définissant les parois de la cavité de l'élément amortisseur 8.

Dans une première variante représentée figure 7a, l'élément en élastomère 11 remplit entièrement la cavité de l'élément amortisseur 8. L'élastomère tapisse les parois de la cavité de l'élément amortisseur 8 et aucun évidement n'est présent dans le cœur de l'élément en élastomère 11.

De manière non limitative, l'élément en élastomère 11 pourra être constitué d'un élastomère naturel (par exemple un caoutchouc), d'un élastomère synthétique (par exemple un silicone), ou bien d'un élastomère à base nitrile. L'élastomère pourra être vulcanisé, par exemple à l'aide de soufre.

En fonction des contraintes à dissiper et pour optimiser la masse, il est possible d'ajouter des évidements dans l'élément en élastomère 11. Ainsi, comme représenté à la figure 7b, dans une deuxième variante, au moins un évidement 111 a été aménagé dans l'épaisseur de l'élastomère 11. Cet évidement 111 peut être de forme quelconque.

Dans un mode de réalisation particulière, l'évidemment 111 suit les contours de la paroi interne de l'élément amortisseur 8.

Autrement dit, l'élément en élastomère 11 tapisse la paroi interne de l'élément amortisseur 8. En particulier, l'élément en élastomère 11 peut former une surépaisseur régulière sur la paroi interne de l'élément amortisseur 8. L'élément en élastomère 11 est en contact avec la paroi interne de l'élément amortisseur 8.

Bien entendu, l'élément en élastomère 11 peut comporter plusieurs d'évidements et la disposition de l'évidement 111 (ou des évidements) n'est pas limitée à celle décrite en référence à la figure 7b.

Dans une troisième variante représentée à la figure 7c, l'élément en élastomère 11 s'étend entre les branches 83, 84 diamétralement opposées de l'élément amortisseur 8.

Plus précisément, l'élément en élastomère réalise une jonction de matière entre les parois intérieures des branches 83, 84 opposées de l'élément amortisseur 8.

Ici, seulement une partie des parois intérieures opposées sont tapissées d'élastomère 11.

Dans un mode de réalisation non représenté, les parois sont tapissées en fonction des zones de contraintes mécaniques auxquelles est soumis l'élément amortisseur 8. Autrement dit, la répartition de l'élastomère peut être irrégulière dans la cavité, notamment sur les parois de la cavité et au coeur de la cavité. Des jonctions de matière d'élastomère 11 pourraient être réalisées en fonction des contraintes mécaniques.

Dans la forme de réalisation représentée ici à la figure 7c, les deux autres parois intérieures des côtés opposés 81, 82 ne sont pas recouvertes d'élastomère 11.

Les deux dernières variantes représentées aux figures 7b et 7c décrites plus haut présentent des alternatives pour limiter l'augmentation de la masse liée à l'ajout d'élastomère dans l'élément amortisseur 8.

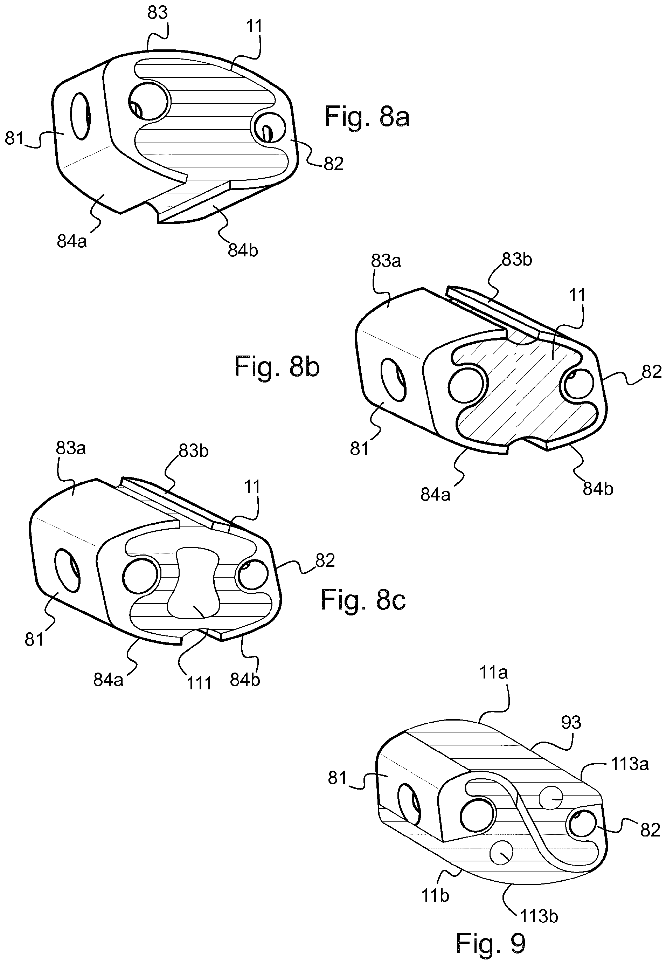

Dans un mode de réalisation alternatif représenté aux figures 8a, 8b et 8c, comme l'élément en élastomère 11 supporte une partie des contraintes mécaniques, le corps creux de l'élément amortisseur 8 peut comporter une ou plusieurs ouvertures en combinaison avec un élément en élastomère 11 remplissant, en tout ou partie, une de ses cavités.

En référence à la figure 8a, l'élément amortisseur 8 comprend une première branche 83 liant le premier côté 81 et le deuxième côté 82 de l'élément amortisseur 8. La deuxième branche 84 n'est pas continue. Autrement dit, la deuxième branche 84 comporte deux arcs 84a, 84b ne se rejoignant pas. Une section creuse ouverte est ainsi définie.

Ainsi ici, l'élément en élastomère 11 remplissant la cavité de l'élément amortisseur 8 supporte une partie des contraintes appliquées à l'élément amortisseur 8 du fait de la discontinuité du corps de l'élément amortisseur 8.

Dans un mode de réalisation, l'élément en élastomère 11 tapisse partiellement la surface intérieure de l'élément amortisseur 8.

Dans un mode de réalisation alternatif non représenté, la deuxième branche 84 peut comporter des échancrures ou des entailles lorsque les contraintes mécaniques appliquées à l'élément amortisseur 8 ne génèrent pas de déformation permanente de l'élément amortisseur 8.

En référence à la figure 8b, les deux branches 83, 84 sont composées respectivement de deux arcs 83a, 83b, 84a et 84b.

Plus précisément, l'élément amortisseur 8 comprend ici deux branches en deux parties 83a, 83b, 84a, 84b disposées entre un premier côté 81 et un deuxième côté 82. Autrement dit, les deux branches de l'élément amortisseur 8 sont en deux parties 83a, 83b, 84a, 84b et ne se rejoignent pas.

L'élément en élastomère 11 remplit entièrement la cavité de l'élément amortisseur 8. Autrement dit, l'élément en élastomère 11 tapisse entièrement la paroi de la surface intérieure de l'élément amortisseur 8 et aucun évidement n'est présent.

Dans un mode de réalisation particulier, l'élément en élastomère 11 tapisse partiellement la surface intérieure de l'élément amortisseur 8. Autrement dit, des évidements en contact avec la surface intérieure de l'élément amortisseur 8 sont présents dans la cavité de l'élément amortisseur 8.

En référence à la figure 8c, l'élément amortisseur 8 comprend aussi deux branches en deux parties 83a, 83b, 84a, 84b disposées entre un premier côté 81 et un deuxième côté 82. Autrement dit, les deux branches en deux parties 83a, 83b, 84a, 84b ne se rejoignent pas.

Dans ce mode de réalisation, l'élément en élastomère 11 comprend au moins un évidement 111. Chaque évidement 111 peut présenter une forme quelconque.

La présence d'au moins un évidemment 111 permet d'obtenir une liaison moins rigide et plus légère.

Ainsi, dans les deux dernières variantes 8b, 8c du mode de réalisation qui vient d'être décrites, l'élément amortisseur 8 est un « amortisseur pure ». Autrement dit, les contraintes sont entièrement transmises par l'élément en élastomère 11. L'élément amortisseur 8 permet ici uniquement de dissiper l'énergie vibratoire. Par ailleurs, la liaison mécanique est entièrement réalisée par l'élément en élastomère 11.

En effet, dans les deux dernières variantes, les deux branches sont en deux parties 83a, 83b, 84a, 84b. Ainsi, aucune des branches ne réalise un pont de matière, soit une liaison mécanique, lorsque l'élément amortisseur 8 est monté entre la partie avant P1 et la partie principale P2 d'une nacelle 10.

Dans un mode de réalisation alternatif représenté à la figure 9, l'élément amortisseur 8 comporte une armature 81, 93, 82 et au moins un élément en élastomère 11.

L'armature 81, 93, 82 comporte uniquement deux côtés 81, 82 et une branche de liaison 93. Les deux côtés 81, 82 peuvent comporter des évidements dans leur épaisseur pour permettre, par exemple, la fixation de l'élément amortisseur 8. Autrement dit, les deux côtés 81, 82 peuvent comprendre des perforations permettant l'insertion de moyens de fixation mécanique classique tel qu'un système vis-écrou. Ces côtés 81, 82 sont reliés entre eux par une branche de liaison 93 continue. Ici, la branche de liaison 93 comporte deux rayons de courbure.

Autrement dit, ici la section de l'armature 81, 93, 82 a sensiblement la forme d'un « S ». Plus précisément, l'armature 81, 93, 82 est formée d'une lame coudée dans la même direction mais en sens opposé à ses deux extrémités opposées. Les angles sont sensiblement de 80° par rapport au plan de plus grande dimension de la lame de matière.

Autrement dit, la lame forme deux coudes diamétralement opposés ayant sensiblement la même direction et de sens opposé.

La forme spécifique de l'armature 81, 93, 82 permet d'optimiser l'absorption des contraintes mécaniques et la dissipation de l'énergie vibratoire.

Ici, l'armature 81, 93, 82 est renforcée par la disposition d'un élément en élastomère formé de deux blocs 11a, 11b d'élastomère. Chaque bloc d'élastomère 11a, 11b peut être plein ou comporter un ou plusieurs évidements 113a, 113b pour minimiser la masse supplémentaire. Les deux blocs 11a, 11b d'élastomère sont liés à l'armature 81, 93, 82.

Plus précisément, un bloc d'élastomère 11a comprenant un évidement de section quelconque 113a est disposé en contact avec un côté 82 et une première face de plus grande dimension de la branche de liaison 93. Un autre bloc d'élastomère 11b comprenant un évidement 113b est disposé en contact avec un côté 81 et la deuxième face de la branche de liaison 93 opposée à la première face. Ainsi, les blocs 11a, 11b permettent de minimiser les déformations de l'armature 81, 93, 82, notamment de la branche de liaison 93, lorsque cette dernière est soumise à des contraintes mécaniques.

Selon un mode de réalisation particulier, l'élément amortisseur 8 présente une section sensiblement ovale, elliptique ou circulaire. Autrement dit, les blocs d'élastomère 11a, 11b comportent au moins une face arrondie.

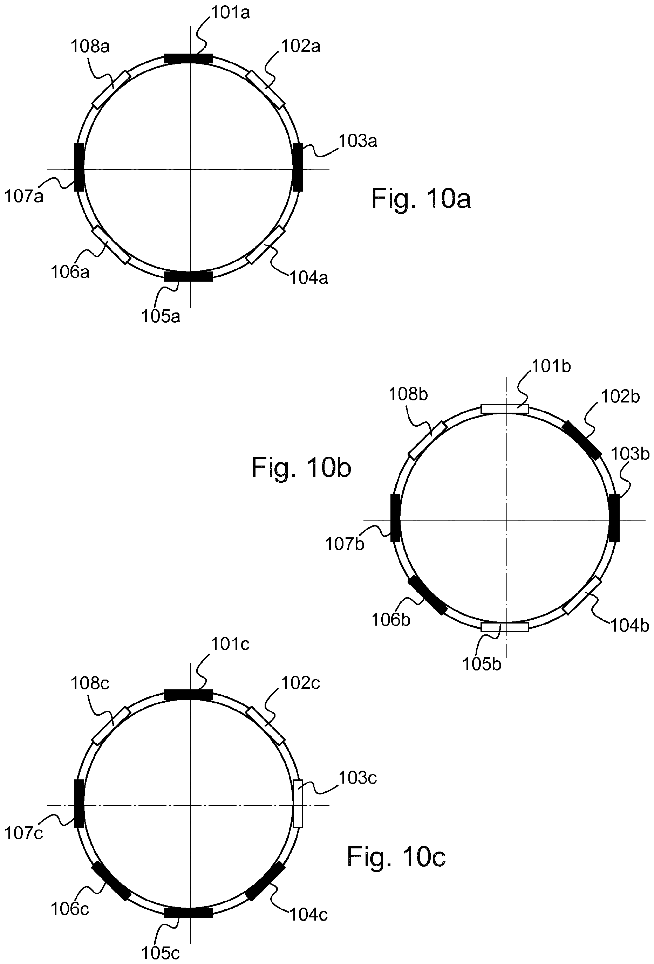

La bride de jonction 6 comporte plusieurs éléments amortisseurs 8a, 8b,8c. Plus précisément, les éléments amortisseurs 8a, 8b, 8c peuvent être répartis circonférentiellement, (le long du bord périphérique interne du cadre de rigidification 5), espacés par exemple de manière régulière les uns des autres comme représenté à la figure 5 ou aux figures 10a à 10c.

Il est possible en fonction de l'orientation des contraintes et/ou d'une potentielle dissymétrie de la nacelle 10 de disposer au moins deux variantes d'éléments amortisseurs 8 espacés régulièrement les unes des autres et disposées sur le pourtour de la bride de jonction 610.

Comme représenté à la figure 10a, deux types d'éléments amortisseurs 8, notés A et B, sont disposés en alternance.

Autrement dit, chaque élément amortisseur 8 est suivi et précédé d'un élément amortisseur 8 de type différent. Par exemple, un élément amortisseur 8 de type A est suivi d'un élément amortisseur 8 de type B et précédé d'un élément amortisseur 8 de type B.

Dans un mode de réalisation alternatif, les éléments amortisseurs 8 peuvent être disposés selon une autre séquence.

Comme représenté à la figure 10b, ici encore huit éléments amortisseurs 101b, 102b, 103b, 104b, 105b, 106b, 107b, 108b sont représentés. Bien entendu, le nombre d'éléments amortisseurs pourrait être tout autre, par exemple et de manière non limitative six, dix, douze, etc

Comme représenté à la figure 10a, deux types d'éléments amortisseurs 8, notés A et B, sont disposés. Un élément amortisseur 8 de type A est disposé entre un élément amortisseur 8 de même type A et un élément amortisseur 8 de type différent, ici de type B. Ainsi, chaque élément amortisseur 8 est toujours suivi et précédé respectivement d'au moins un élément amortisseur 8 de même type et d'un élément amortisseur 8 de type différent.

Cette disposition particulière peut permettre de répondre de manière optimale à une potentielle dissymétrie de la nacelle 10 et/ou à une dissymétrie des contraintes mécaniques et/ou à une dissymétrie des chargements mécaniques en optimisant l'absorption de l'énergie vibratoire.

Dans un dernier mode de réalisation, ici encore huit éléments amortisseurs 101c, 102c, 103c, 104c, 105c, 106c, 107c, 108c sont représentés. Ici encore le nombre d'éléments amortisseurs n'est pas limitatif.

Les éléments amortisseurs sont répartis de manière spécifique. Autrement dit, aucune séquence régulière n'est reconnaissable dans la répartition des types d'éléments amortisseurs. Cependant, les éléments amortisseurs sont encore espacés de manière régulière les uns des autres.

Cette disposition particulière permet de répondre aux contraintes spécifiques liées par exemple à une structure dissymétrique de la nacelle 10.

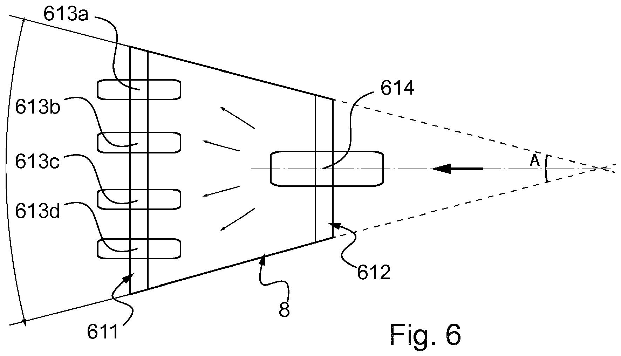

Comme cela est illustré aux figures 5 et 6, dans un mode de réalisation particulier, les perforations pour la fixation de l'élément amortisseur 8 et de la bride d'étanchéité 610 peuvent être disposées de manière adaptée à répartir les efforts issus de la bride moteur 7.

Plus précisément, les perforations 613 sur la première branche 611 de la bride d'étanchéité 610 peuvent être sensiblement dans un même plan que les perforations 614 sur la deuxième branche 612 de la bride de jonction 610, ou dans des plans différents, de sorte à amorcer une déformation contrôlée de l'élément amortisseur 8, du côté souhaité.

Comme illustré sur la figure 6, la deuxième branche 612 de la bride d'étanchéité 610 comporte par exemple une perforation 614 pour plusieurs perforations (à savoir ici quatre perforations) 613a, 613b, 613c, 613d sur la première branche de 611 de la bride d'étanchéité 610. Cette répartition des perforations (et donc au final des liaisons) permet une meilleure répartition des efforts. Bien évidemment, le nombre de liaisons peut être adapté à chaque configuration considérée, par exemple une liaison ou deux liaisons d'une part pour une, deux, trois, quatre, cinq six, sept ou huit d'autre part.

De manière avantageuse, la somme des diamètres des perforations 613a, 613b, 613c, 613d disposées dans l'épaisseur de la première branche 611 est supérieure au diamètre seul de la perforation 614 disposée dans l'épaisseur de la deuxième branche 612.

Ainsi, l'effort d'entrée reçu et tenu par la liaison formée par exemple par un ensemble vis-écrou 92 du côté de la bride moteur 7 est réparti en sortie sur les liaisons formées par exemple par des systèmes vis-écrous 91 du côté du cadre de rigidification 5.

En outre, pour faciliter une amorce de déformation contrôlée, les fixations situées respectivement du côté de la bride moteur 7 et celles situées du côté du cadre de rigidification 5 peuvent de manière optionnelle être décalées radialement, c'est-à-dire à des distances différentes de l'axe principal de la nacelle.

Toutefois, aucune perforation 613a, 613b, 613c, 613d (et en correspondance aucune liaison) définie dans l'épaisseur de la première branche 611 n'est en vis-à-vis de la perforation 614 (et donc de la liaison) correspondante définie dans l'épaisseur de la deuxième branche 612.

Cette disposition spécifique permet d'optimiser la distribution des efforts dans l'élément amortisseur 8.

Ainsi, les quatre perforations 613a, 613b, 613c, 613d, et les perforations correspondantes de l'élément amortisseur 8 sont espacées régulièrement et sont disposées symétriquement par rapport à l'axe de la perforation 614 et de la perforation correspondante de l'élément amortisseur.

Alternativement, une vis (ou plusieurs vis) traversant la bride de jonction 6 peut permettre de former les liaisons de ladite bride de jonction 6 avec le cadre de rigidification 5 d'une part et avec la bride moteur 7 d'autre part.

Comme cela est illustré à la figure 6, l'élément amortisseur 8 vu de dessus (perpendiculairement à la vue en coupe de la figure 4, et en direction de l'axe principal de la nacelle) peut présenter une forme sensiblement en trapèze isocèle dont l'angle A formé entre ses côtés détermine la répartition dans l'élément amortisseur des efforts issus de la bride moteur 7 vers le cadre de rigidification 5. En particulier, les quatre (par exemple) perforations 613a, 613b, 613c, 613d dans l'épaisseur de la première branche 611 et dans le premier côté 81 de l'élément amortisseur 8 en correspondance peuvent être situées dans un angle d'ouverture de 45° environ formé depuis une perforation 614 située dans l'épaisseur de la deuxième branche 612 de la bride d'étanchéité 610 et le deuxième côté 82 de l'élément amortisseur 8 en correspondance.

L'invention ainsi développée offre une liaison optimisée entre la partie avant P1 et la partie principale P2 d'une nacelle d'un ensemble propulsif d'aéronef, permettant en particulier d'absorber des efforts mécaniques très importants, tout en protégeant la liaison entre la partie avant P1 et la partie principale P2 d'un risque de rupture. La liaison développée dans l'invention est particulièrement adaptée à un groupe propulsif présentant une nacelle de grandes dimensions, par exemple un groupe propulsif de type à fort taux de dilution.

## Revendications

1. Nacelle d'un ensemble propulsif d'aéronef, comportant une partie avant (P1) et une partie principale (P2), ladite partie avant (P1) ayant une extrémité avant formant une entrée d'air (21) dans la nacelle et une extrémité arrière comportant un cadre de rigidification (5) annulaire autour d'un axe de révolution, ledit cadre de rigidification (5) comprenant un bord périphérique externe (121) lié à un panneau externe de la nacelle et un bord périphérique interne (52), ladite partie avant comportant en outre une pièce de liaison (12) reliant ledit bord périphérique interne (52) du cadre de rigidification (5) à une structure interne de la nacelle et une bride de jonction (6) liée d'une part audit bord périphérique interne (52) du cadre de rigidification (5) et d'autre part à une bride moteur (7) de la partie principale (P2), telle que la bride de jonction (6) comporte plusieurs éléments amortisseurs (8) déformables repartis le long dudit bord périphérique interne (52) du cadre de rigidification (5) distant de la structure interne de la nacelle.

2. Nacelle selon la revendication 1, dans laquelle au moins l'une des liaisons entre la bride de jonction (6) et le cadre de rigidification (5) d'une part, et entre la bride de jonction (6) et la bride moteur (7) d'autre part comporte une entretoise (910, 920) adaptée à se déformer sous l'effet de contraintes mécaniques entre ladite bride moteur (7) et ledit cadre de rigidification (5).

3. Nacelle selon la revendication 1 ou la revendication 2, dans laquelle chaque élément amortisseur (8) est formé d'un pont de matière présentant une section fermée creuse.

4. Nacelle selon la revendication 3, dans laquelle ladite section fermée creuse forme une cavité dans laquelle est inséré un élément en élastomère (11).

5. Nacelle selon la revendication 4, dans laquelle ledit élément en élastomère (11) comporte au moins un évidement (111, 112a, 112b) de matière.

6. Nacelle selon la revendication 4, telle que ledit élément en élastomère (11) s'étend entre au moins deux surfaces dudit élément amortisseur (8).

7. Nacelle selon la revendication 1 ou la revendication 2, dans laquelle au moins un élément amortisseur (8) comporte un pont de matière et un élément en élastomère (11), ledit pont de matière comporte une section ouverte creuse et ledit élément en élastomère (11) tapisse les parois internes dudit élément amortisseur (8).

8. Nacelle selon la revendication 1 ou la revendication 2, dans laquelle au moins un élément amortisseur (8) comporte une armature (81, 82, 93) et un élément en élastomère (11), ladite armature (81, 82, 93) comportant une section sensiblement en forme de « S », ladite armature (81, 82, 93) étant en tout ou partie incluse dans ledit élément en élastomère (11a, 11b).

9. Nacelle selon l'une des revendications précédentes, dans laquelle chaque élément amortisseur (8) présente une section de forme sensiblement ovale, par exemple elliptique, ou circulaire.

10. Nacelle selon l'une des revendications précédentes comportant des liaisons communes entre le cadre de rigidification (5), la pièce de liaison (12) et les éléments amortisseurs (8) de la bride de jonction (6).

11. Nacelle selon l'une des revendications précédentes, dans laquelle les liaisons entre le cadre de rigidification (5) et la bride de jonction (6) d'une part et entre la bride de jonction (6) et la bride moteur (7) d'autre part comportent chacune au moins un ensemble vis-écrou (91, 92), et dans laquelle chaque élément amortisseur (8) de la bride de jonction (6) comporte un premier côté (81) et un deuxième côté (82) qui comportent respectivement des supports (811, 822) adaptés à recevoir et maintenir les écrous desdits ensembles vis-écrous.

12. Nacelle selon l'une des revendications précédentes, telle que ladite bride de jonction (6) comporte une bride d'étanchéité (610) formée d'un anneau ayant une section sensiblement en forme de « U », et en ce qu'une branche (611) du « U » est liée audit cadre de rigidification (5) et l'autre branche (612) du « U » est liée à ladite bride moteur (7).

13. Nacelle selon la revendication 12, dans laquelle la bride d'étanchéité (610), l'élément amortisseur (8), et le cadre de rigidification (5) d'une part, et la bride d'étanchéité (610), l'élément amortisseur (8) et la bride moteur (7) d'autre part, sont liés entre eux par des liaisons communes tels que des systèmes vis-écrou.

14. Nacelle selon l'une des revendications précédentes, dans laquelle les liaisons entre le cadre de rigidification (5) et la bride de jonction (6) d'une part, et entre la bride de jonction (6) et la bride moteur (7) d'autre part sont décalées circonférentiellement les unes des autres de sorte à ne pas être en regard.

15. Ensemble propulsif d'aéronef comportant une nacelle (10), ladite nacelle (10) étant conforme à l'une des revendications précédentes.

## Patentansprüche

1. Gondel einer Luftfahrzeug-Antriebseinheit, die einen vorderen Teil (P1) und einen Hauptteil (P2) aufweist, wobei der vordere Teil (P1) ein vorderes Ende, das einen Lufteinlass (21) in die Gondel bildet, und ein hinteres Ende hat, das einen ringförmigen Versteifungsrahmen (5) um eine Drehachse aufweist, wobei der Versteifungsrahmen (5) einen mit einer Außenplatte der Gondel verbundenen äußeren Umfangsrand (121) und einen inneren Umfangsrand (52) aufweist, wobei der vordere Teil außerdem ein Verbindungsbauteil (12), das den inneren Umfangsrand (52) des Versteifungsrahmens (5) mit einer inneren Struktur der Gondel verbindet, und einen Verbindungsflansch (6) aufweist, der einerseits mit dem inneren Umfangsrand (52) des Versteifungsrahmens (5) und andererseits mit einem Motorflansch (7) des Hauptteils (P2) verbunden ist, derart, dass der Verbindungsflansch (6) mehrere verformbare Dämpfungselemente (8) aufweist, die entlang des inneren Umfangsrands (52) des Versteifungsrahmens (5) in Abstand zur inneren Struktur der Gondel verteilt sind.

2. Gondel nach Anspruch 1, wobei mindestens eine der Verbindungen zwischen dem Verbindungsflansch (6) und dem Versteifungsrahmen (5) einerseits und zwischen dem Verbindungsflansch (6) und dem Motorflansch (7) andererseits einen Abstandshalter (910, 920) aufweist, der sich unter der Wirkungen von mechanischen Beanspruchungen zwischen dem Motorflansch (7) und dem Versteifungsrahmen (5) verformen kann.

3. Gondel nach Anspruch 1 oder Anspruch 2, wobei jedes Dämpfungselement (8) von einer Materialbrücke geformt wird, die einen geschlossenen Hohlquerschnitt aufweist.

4. Gondel nach Anspruch 3, wobei der geschlossene Hohlquerschnitt einen Hohlraum formt, in den ein Element aus Elastomermaterial (11) eingefügt ist.

5. Gondel nach Anspruch 4, wobei das Element aus Elastomermaterial (11) mindestens eine Materialaussparung (111, 112a, 112b) aufweist.

6. Gondel nach Anspruch 4, derart, dass das Element aus Elastomermaterial (11) sich zwischen mindestens zwei Flächen des Dämpfungselements (8) erstreckt.

7. Gondel nach Anspruch 1 oder Anspruch 2, wobei mindestens ein Dämpfungselement (8) eine Materialbrücke und ein Element aus Elastomermaterial (11) aufweist, wobei die Materialbrücke einen offenen Hohlquerschnitt aufweist und das Element aus Elastomermaterial (11) die Innenwände des Dämpfungselements (8) bedeckt.

8. Gondel nach Anspruch 1 oder Anspruch 2, wobei mindestens ein Dämpfungselement (8) eine Armierung (81, 82, 93) und ein Element aus Elastomermaterial (11) aufweist, wobei die Armierung (81, 82, 93) einen im Wesentlichen S-förmigen Querschnitt aufweist, wobei die Armierung (81, 82, 93) ganz oder teilweise im Element aus Elastomermaterial (11a, 11b) eingeschlossen ist.

9. Gondel nach einem der vorhergehenden Ansprüche, wobei jedes Dämpfungselement (8) einen Querschnitt von im Wesentlichen ovaler, zum Beispiel elliptischer, oder kreisrunder Form aufweist.

10. Gondel nach einem der vorhergehenden Ansprüche, die gemeinsame Verbindungen zwischen dem Versteifungsrahmen (5), dem Verbindungsbauteil (12) und den Dämpfungselementen (8) des Verbindungsflanschs (6) aufweist.

11. Gondel nach einem der vorhergehenden Ansprüche, wobei die Verbindungen zwischen dem Versteifungsrahmen (5) und dem Verbindungsflansch (6) einerseits und zwischen dem Verbindungsflansch (6) und dem Motorflansch (7) andererseits je mindestens eine Schraube-Mutter-Einheit (91, 92) aufweisen, und wobei jedes Dämpfungselement (8) des Verbindungsflanschs (6) eine erste Seite (81) und eine zweite Seite (82) aufweist, die je Träger (811, 822) aufweisen, die die Muttern der Schraube-Mutter-Einheiten aufnehmen und halten können.

12. Gondel nach einem der vorhergehenden Ansprüche, derart, dass der Verbindungsflansch (6) einen Dichtungsflansch (610) aufweist, der von einem Ring geformt wird, der einen im Wesentlichen U-förmigen Querschnitt hat, und dass ein Schenkel (611) des "U" mit dem Versteifungsrahmen (5) und der andere Schenkel (612) des "U" mit dem Motorflansch (7) verbunden ist.

13. Gondel nach Anspruch 12, wobei der Dichtungsflansch (610), das Dämpfungselement (8) und der Versteifungsrahmen (5) einerseits und der Dichtungsflansch (610), das Dämpfungselement (8) und der Motorflansch (7) andererseits durch gemeinsame Verbindungen wie Schraube-Mutter-Systeme miteinander verbunden sind.

14. Gondel nach einem der vorhergehenden Ansprüche, wobei die Verbindungen zwischen dem Versteifungsrahmen (5) und dem Verbindungsflansch (6) einerseits und zwischen dem Verbindungsflansch (6) und dem Motorflansch (7) andererseits in Umfangsrichtung zueinander versetzt sind, um sich nicht gegenüberzuliegen.

15. Luftfahrzeug-Antriebseinheit, die eine Gondel (10) aufweist, wobei die Gondel (10) einem der vorhergehenden Ansprüche entspricht.

## Claims

1. Nacelle for an aircraft propulsion assembly, comprising a front part (P1) and a main part (P2), said front part (P1) having a front end forming an air intake (21) into the nacelle and a rear end comprising a stiffening frame (5) that is annular about an axis of revolution, said stiffening frame (5) comprising an outer peripheral edge (121) connected to an outer panel of the nacelle and an inner peripheral edge (52), said front part further comprising a connecting part (12) connecting said inner peripheral edge (52) of the stiffening frame (5) to an internal structure of the nacelle and a joining flange (6) connected on one hand to said inner peripheral edge (52) of the stiffening frame (5) and on the other hand to an engine flange (7) of the main part (2), such that the joining flange (6) comprises a plurality of deformable damping elements (8) distributed along said inner peripheral edge (52) of the stiffening frame (5), remote from the internal structure of the nacelle.

2. Nacelle according to Claim 1, wherein at least one of the connections between the joining flange (6) and the stiffening frame (5) on one hand, and between the joining flange (6) and the engine flange (7) on the other hand comprises a spacer (910, 920) designed to deform under the effect of mechanical stresses between said engine flange (7) and said stiffening flange (5).

3. Nacelle according to either of Claims 1 and 2, wherein each damping element (8) consists of a bridge of material having a hollow closed cross section.

4. Nacelle according to Claim 3, wherein said hollow closed cross section forms a cavity into which an elastomer element (11) is inserted.

5. Nacelle according to Claim 4, wherein said elastomer element (11) comprises at least one cutaway (111, 112a, 112b) of material.

6. Nacelle according to Claim 4, such that said elastomer element (11) extends between at least two surfaces of said damping element (8).

7. Nacelle according to Claim 1 or Claim 2, wherein at least one damping element (8) comprises a bridge of material and an elastomer element (11), said bridge of material comprises a hollow open cross section and said elastomer element (11) covers the internal walls of said damping element (8).

8. Nacelle according to Claim 1 or Claim 2, wherein at least one damping element (8) comprises a reinforcement (81, 82, 93) and an elastomer element (11), said reinforcement (81, 82, 93) comprising an essentially "S"-shaped cross section, said reinforcement (81, 82, 93) being entirely or partially included in said elastomer element (11).

9. Nacelle according to one of the preceding claims, wherein each damping element (8) has an essentially oval, for example, elliptical, or circular cross section.

10. Nacelle according to one of the preceding claims, comprising common connections between the stiffening frame (5), the connecting part (12) and the damping elements (8) of the joining flange (6).

11. Nacelle according to one of the preceding claims, wherein the connections between the stiffening frame (5) and the joining flange (6) on one hand and between the joining flange (6) and the engine flange (7) on the other hand each comprise at least one screw-and-nut assembly (91, 92), and wherein each damping element (8) of the joining flange (6) comprises a first side (81) and a second side (82) that respectively comprise supports (811, 822) designed to receive and retain the nuts of said screw-and-nut assemblies.

12. Nacelle according to one of the preceding claims, such that said joining flange (6) comprises a sealing flange (610) formed by a ring having a substantially U-shaped cross section, and in that one branch (611) of the "U" is connected to said stiffening frame (5) and the other branch (612) of the "U" is connected to said engine flange (7).

13. Nacelle according to Claim 12, wherein the sealing flange (610), the damping element (8) and the stiffening frame (5) on one hand and the sealing flange (610), the damping element (8) and the engine flange (7) on the other hand are connected together by common connections such as screw-and-nut systems.

14. Nacelle according to one of the preceding claims, wherein the connections between the stiffening frame (5) and the joining flange (6) on one hand and between the joining flange (6) and the engine flange (7) on the other hand are circumferentially offset from each other so as not to be facing each other.

15. Aircraft propulsion assembly comprising a nacelle (10), said nacelle (10) being a nacelle according to one of the preceding claims.
